# EUROPEAN PATENT APPLICATION

(11) **EP 4 186 937 A1**
(43) Date of publication of application: **31.05.2023**
(21) Application number: 21846772.8
(22) Date of filing: 01.07.2021
(51) Int. Cl.: C08G 59/20, C09J 11/04, C09J 11/08, C09J 163/00, C09J 201/00, H01B 1/22, C09J 7/30

(54) **THERMALLY CONDUCTIVE ADHESIVE SHEET AND SEMICONDUCTOR DEVICE**

(30) Priority: 21.07.2020 JP 2020124703
(71) Applicant: Kyocera Corporation, Kyoto-shi Kyoto 612-8501 (JP)
(72) Inventor: ARAKAWA, Yosuke, Kyoto-shi, Kyoto 612-8501 (JP); OKANO, Kazunori, Kyoto-shi, Kyoto 612-8501 (JP)
(74) Representative: Viering, Jentschura & Partner mbB Patent- und Rechtsanwälte
(86) International application number: PCT/JP2021/024896
(87) International publication number: WO 2022/019075

(57) **Abstract**

A thermally conductive adhesive sheet includes a resin composition that is formed into a sheet. The resin composition contains a conductive particle (A), a thermosetting resin (B), a block copolymer (C), and a binder resin (D). The block copolymer (C) is at least one selected from the group consisting of a copolymer having three blocks (triblock) or more and made from poly(methyl methacrylate) and poly(butyl acrylate) and a copolymer having three blocks (triblock) or more and made from poly(styrene), poly(butadiene), and poly(methyl methacrylate).

## Description

### TECHNICAL FIELD

The present disclosure relates to a thermally conductive adhesive sheet and a semiconductor device.

### BACKGROUND OF INVENTION

In recent years, with increase in the awareness of environmental issues, semiconductor devices for power generation have become widely used not only for general industrial applications and electric railroad applications but also for in-car applications. Particularly, regarding in-car components, downsizing and weight-saving of components are performed in a limited allowable size and directly linked to vehicle performance, and accordingly, for semiconductor devices for power generation for in-car components, downsizing is an extremely important issue. In such a semiconductor device, for example, a semiconductor element for power generation is mounted on a die pad on a DBC (Direct Bonded Copper: registered trademark) substrate via a highly heat-resistant high-lead solder. However, use of lead-containing harmful substances has become controlled, and lead-free technology is desired.

A bonding method using a sintered silver paste as a highly heat-resistant lead-free bonding material except high-lead solder is investigated, in which a nano-order silver filler is bonded at a temperature not higher than the melting point thereof (see, e.g., Patent Document 1). A sintered silver paste has a high thermal conductivity and is effective for bonding semiconductor elements for high-current power generation. However, from the viewpoint of downsizing and thinning semiconductor devices, a sheet material capable of forming a thin layer is desired for a bonding material.

Generally, a coefficient of thermal conductivity of solder is 30 W/m K, and thus a sheet material having a high coefficient of thermal conductivity has been desired as a substitute for the solder, and such a sheet material has also been provided (see, e.g., Patent Document 2).

### CITATION LIST

### PATENT LITERATURE

Patent Document 1: WO 2015/151136 A
Patent Document 2: JP 2016-536467 A

### SUMMARY

[1] A thermally conductive adhesive sheet of the present disclosure includes a resin composition that is formed into a sheet. The resin composition contains a conductive particle (A), a thermosetting resin (B), a block copolymer (C), and a binder resin (D). The block copolymer (C) is at least one selected from the group consisting of a copolymer having three blocks (triblock) or more and made from poly(methyl methacrylate) and poly(butyl acrylate) and a copolymer having three blocks (triblock) or more and made from poly(styrene), poly(butadiene), and poly(methyl methacrylate).
[2] The semiconductor device of the present disclosure includes: a supporting member; and a semiconductor element mounted on the supporting member with an adhesive layer interposed therebetween. The adhesive layer is a cured product of the thermally conductive adhesive sheet described in [1] above.

### DESCRIPTION OF EMBODIMENTS

A few sheet materials having a high thermal conductivity are on the market. This is because, when a sheet material is designed to express a thermal conductivity like that of a solder material, reliability characteristics in a hot-cold cycle test or the like may often worsen as a reaction thereto.

A sheet material highly filled with a filler has an excellent coefficient of thermal conductivity, but greatly reduces the adhesiveness of the sheet. A sheet material having low adhesiveness, upon bonding a substrate and an element, causes cracks and peeling in a hot-cold cycle test or the like. A method for bonding a substrate and an element using a semiconductor sheet material includes a laminating step of bonding a sheet and a semiconductor wafer, a temporary bonding step of temporarily fixing a chip with a sheet to a substrate, and a curing step of finally curing the temporarily bonded body to form a final bonded body. All of these steps have an influence on the adhesiveness of the sheet material. However, in the sheet material highly filled with a filler, particularly temporary adhesiveness and adhesiveness after being cured become insufficient.

The present disclosure provides a thermally conductive adhesive sheet excellent in temporary adhesiveness and adhesiveness after being cured, which enables a semiconductor device having excellent reliability. The present disclosure also provides a semiconductor device formed by bonding semiconductor elements with the thermally conductive adhesive sheet.

Hereinafter, the present disclosure will be described in detail with reference to an embodiment.

### Thermally Conductive Adhesive Sheet

The thermally conductive adhesive sheet of the present embodiment includes a resin composition that is formed into a sheet, the resin containing a conductive particle (A), a thermosetting resin (B), a block copolymer (C), and a binder resin (D). The block copolymer (C) is at least one selected from the group consisting of a copolymer having three blocks (triblock) or more and made from poly(methyl methacrylate) and poly(butyl acrylate), and a copolymer having three blocks (triblock) or more and made from poly(styrene), poly(butadiene), and poly(methyl methacrylate).

### Conductive Particle (A)

The conductive particle (A) used in the present embodiment is not particularly limited, and examples thereof include a metal particle such as a silver particle and a copper particle, or a metal-coated particle. The metal-coated particle may be a particle in which a core particle is coated with metal or carbon, or may be, for example, a particle in which a surface of a core made from a transition metal such as nickel is coated with metal such as gold or silver, or a particle in which a conducting layer is formed by coating a surface of a non-conductive glass, a ceramic, a plastic, or the like with the above metal or the like. The conducting layer may be a single layer or multiple layers, and the outermost layer may be a metal layer. One type of the conductive particle (A) may be used, or two or more types thereof may be used in combination.

The average particle size of the conductive particles (A) may be 0.010 µm or more and 15 µm or less, may be 0.020 µm or more and 10 µm or less, or may be 0.020 µm or more and 5 µm or less. When the average particle size is 0.010 µm or more, the sheet performance is good, and when the average particle size is 15 µm or less, the coefficient of thermal conductivity is increased.
The average particle size of the conductive particles (A) is a particle size (50% particle size D₅₀) at which the cumulative volume reaches 50% in a particle size distribution measured using a laser diffraction-type particle size distribution measurement device. Specifically, the average particle size can be measured by the method described in the examples.

The shape of the conductive particle (A) is not particularly limited, and examples thereof include a spherical shape, a flake shape, and a scale. The shape of the conductive particle (A) may be spherical.

The conductive particle (A) may be a metal particle or a silver particle from the viewpoint of thermal conductivity.
The silver particle is not particularly limited, but may be (A1) silver particles having an average particle size of 0.5 µm or more and 5.0 µm or less, may be (A2) silver particles having an average particle size of 10 nm or more and 200 nm or less, or may be a combination of silver particles (A1) and silver particles (A2).
The average particle size of the silver particles (A1) may be 0.5 µm or more and 5.0 µm or less, may be 0.5 µm or more and 3.0 µm or less, or may be 1.0 µm or more and 3.0 µm or less. When the average particle size of the silver particles (A1) is 0.5 µm or more, the sheet performance is improved, and when the average particle size is 5.0 µm or less, the coefficient of thermal conductivity is increased.

The tap density of the silver particles (A1) may be 4.0 g/cm³ or more and 7.0 g/cm³ or less, and may be 4.5 g/cm³ or more and 7.0 g/cm³ or less. When the tap density of the silver particles (A1) is 4.0 g/cm³ or more, a sheet can have a high coefficient of thermal conductivity, and when the tap density is 7.0 g/cm³ or less, sedimentation of the silver particles (A1) during the production of the sheet can be reduced.
The tap density of the silver particles (A1) can be measured using a tap density measuring instrument.

The specific surface area of the silver particles (A1), as determined by the BET method, may be 0.5 m²/g or more and 1.5 m²/g or less, or may be 0.5 m²/g or more and 1.2 m²/g or less. When the specific surface area of the silver particles (A1) is 0.5 m²/g or more, the stickiness of the sheet can be reduced, and when the specific surface area is 1.5 m²/g or less, the temporary adhesiveness can be improved.
The specific surface area of the silver particles (A1) can be measured by the single point BET method through nitrogen adsorption using a specific surface area measuring device.

The average particle size of the silver particles (A2) may be 10 nm or more and 200 nm or less, may be 10 nm or more and 150 nm or less, or may be 10 nm or more and 100 nm or less. When the average particle size of the silver particles (A2) is 10 nm or more, the sheet performance can be improved, and when the average particle size is 200 nm or less, the coefficient of thermal conductivity of the sheet can be increased due to sintering.

When the silver particles (A1) and the silver particles (A2) are used as the conductive particle (A), a content ratio [(A1)/(A2)] of the silver particles (A1) and the silver particles (A2) may be 10/90 or more and 90/10 or less, or may be 50/50 or more and 90/10 or less in terms of mass ratio. When the content ratio [(A1)/(A2)] is 10/90 or more, the coating stability of the sheet can be improved, and when the content ratio is 90/10 or less, the sheet can have a high coefficient of thermal conductivity.

The content of the conductive particle (A) may be 40.0 mass% or more and 90.0 mass% or less, may be 45.0 mass% or more and 85.0 mass% or less, or may be 50.0 mass% or more and 80.0 mass% or less relative to the total amount of the resin composition. When the content of the conductive particle (A) is 40.0 mass% or more, the sheet can have a high coefficient of thermal conductivity, and when the content is 90.0 mass% or less, the sheet performance can be improved.

### Thermosetting Resin (B)

The thermosetting resin (B) used in the present embodiment is not particularly limited, and any thermosetting resin can be used as long as it is a thermosetting resin generally used for adhesive applications. The thermosetting resin (B) may be liquid or solid at room temperature (25°C). From the viewpoint of the coefficient of thermal conductivity and sheet performance, the thermosetting resin (B) may be solid at room temperature (25°C).
The weight-average molecular weight (Mw) of the thermosetting resin (B) may be 300 or more and 4000 or less, may be 400 or more and 3000 or less, may be 500 or more and 3000 or less, or may be 1000 or more and 2000 or less from the viewpoint of temporary adhesiveness and adhesiveness after being cured. Here, in the present specification, Mw is a value calculated by converting a chromatogram measured by gel permeation chromatography (GPC) into a molecular weight of standard polystyrene.

Examples of the thermosetting resin (B) include epoxy resins, cyanate resins, and imide resins. One type of these resins may be used, or two or more types may be used in combination. The thermosetting resin (B) may be an epoxy resin from the viewpoint of adhesiveness.

The epoxy resin is a compound having one or more glycidyl groups per molecule, and is a resin that is cured by forming a three-dimensional mesh structure upon reaction of the glycidyl groups by heating. The epoxy resin may be a compound containing two or more glycidyl groups per molecule. This is because sufficient cured product properties cannot be exhibited with only a compound having one glycidyl group per molecule, even when the compound is reacted. A compound having two or more glycidyl groups per molecule can be produced by epoxidizing a compound having two or more hydroxyl groups. Examples of such compounds include, but are not limited to, bifunctional compounds produced by epoxidizing, for example, bisphenol compounds or derivatives thereof, such as bisphenol A, bisphenol F, and biphenol, diols having an alicyclic structure or derivatives thereof, such as hydrogenated bisphenol A, hydrogenated bisphenol F, hydrogenated bisphenol, cyclohexanediol, cyclohexanedimethanol, and cyclohexanediethanol, and aliphatic diols and derivatives thereof, such as butanediol, hexanediol, octanediol, nonanediol, and decanediol; trifunctional compounds produced by epoxidizing compounds having a trihydroxyphenyl methyl skeleton or an aminophenol skeleton; and polyfunctional compounds obtained by epoxidizing a phenolic novolac resin, a cresol novolac resin, a phenol aralkyl resin, a biphenyl aralkyl resin, or a naphthol aralkyl resin.

The epoxy resin may be a solid epoxy resin, or may be a liquid epoxy resin, but may be a solid epoxy resin from the viewpoint of temporary adhesiveness and adhesiveness after being cured. Here, the term "liquid epoxy resin" refers to an epoxy resin (semisolid epoxy resin) in a liquid or semisolid form at room temperature (25°C), such as an epoxy resin having fluidity at room temperature (25°C).

From the viewpoint of temporary adhesiveness and adhesiveness after being cured, the solid epoxy resin and the semisolid epoxy resin may have a softening point of less than 80°C, or may have a softening point of 30°C or higher and less than 80°C, as measured by the DSC method. The softening point as measured by the ring and ball method may be 30°C or higher and 150°C or lower, may be 35°C or higher and 140°C or lower, or may be 40°C or higher and 120°C or lower.
Since the solid epoxy and the semisolid epoxy resin are sufficiently softened at the curing temperature, the adhesiveness at the time of heating is good.
Note that the softening points of the solid epoxy resin and the semisolid epoxy resin can be measured by differential scanning calorimetry (DSC) or the ring and ball method, and can be measured specifically by the method described in Examples.

The viscosity at 25°C of the liquid epoxy resin may be 20 Pa · s or less, or may be 12 Pa · s or more and 10 Pa · s or less.
Note that the viscosity at 25°C of the liquid epoxy resin can be measured with a rotary viscometer, and can be measured specifically by the method described in Examples.

The content of the thermosetting resin (B) may be 0.5 mass% or more and 20.0 mass% or less, may be 0.5 mass% or more and 18.0 mass% or less, or may be 1.0 mass% or more and 15.0 mass% or less relative to the total amount of the resin composition. When the content of the thermosetting resin (B) is 0.5 mass% or more, the sheet performance is improved, and when the content of the thermosetting resin (B) is 20.0 mass% or less, a reduction in the thermal conductivity can be controlled.

### Block Copolymer (C)

The block copolymer (C) used in the present embodiment is at least one selected from the group consisting of a copolymer having three blocks (triblock) or more and made from poly(methyl methacrylate) [PMMA] and poly(butyl acrylate) [PBA], and a copolymer having three blocks (triblock) or more and made from poly(styrene) [PS], poly(butadiene) [BR], and poly(methyl methacrylate) [PMMA].

The block copolymer (C) may have a structure in which a polymer serving as a hard block is connected to both ends of a polymer serving as a soft block. Here, "both ends of a polymer" refers to the distal portion of the longest linear chain in molecular chains constituting the polymer.

The "soft block" has a relatively low glass transition temperature (Tg) as compared with the "hard block". The Tg of the hard block may be 40°C or higher, or may be 80°C or higher from the viewpoint of temporary adhesiveness, adhesiveness after being cured, and reliability. The upper limit of Tg of the hard block may be 160°C or lower, or may be 140°C or lower. The Tg of the soft block may be 10°C or lower, or may be -90°C or higher and 10°C or lower from the viewpoint of temporary adhesiveness, adhesiveness after being cured, and reliability. The difference between the Tg of the hard block and the Tg of the soft block may be 80°C or higher and 220°C or lower.
Note that the glass transition temperature can be measured in accordance with JIS K7121: 2012.

In the block copolymer (C), a polymer that is hardly compatible with the thermosetting resin (B) may be used for the central soft block, and a polymer that is easily compatible with the thermosetting resin (B) may be connected to one or both of the hard blocks. The block copolymer having this structure tends to be microdispersed in the thermosetting resin (B). The block copolymer having this structure is microdispersed in the thermosetting resin (B), which enables improvement of the adhesiveness after being cured and reliability. The polymer constituting the hard block has a higher glass transition temperature than the polymer constituting the soft block. Accordingly, in a case where the temporary bonding step in a high temperature environment is performed, the wettability between the sheet material and the adherend is improved by softening the hard block. This can improve the temporary adhesiveness.

When the block copolymer (C) is a diblock copolymer, the temporary adhesiveness and the adhesiveness after being cured may become insufficient. The number of blocks of the block copolymer (C) is not particularly limited as long as the number is 3 or more, but may be 3 or more and 7 or less, may be 3 or more and 5 or less, or may be 3 from the viewpoint of temporary adhesiveness and adhesiveness after being cured.

The number average molecular weight of the block copolymer (C) may be 2000 or more and 500000 or less, may be 2000 or more and 200000 or less, or may be 2000 or more and 50000 or less from the viewpoint of temporary adhesiveness, adhesiveness after being cured, and reliability.

Specific examples of the block copolymer (C) include a triblock copolymer of poly(methyl methacrylate)/poly(butyl acrylate)/poly(methyl methacrylate), which is a triblock copolymer produced by copolymerizing poly(methyl methacrylate), poly(butyl acrylate), and poly(methyl methacrylate) in this order, and a triblock copolymer of poly(styrene)/poly(butadiene)/poly(methyl methacrylate), which is a triblock copolymer produced by copolymerizing poly(styrene), poly(butadiene), and poly(methyl methacrylate) in this order.

The block copolymer (C) is procurable as a commercially available product. Examples of the triblock copolymer of poly(methyl methacrylate)/poly(butyl acrylate)/poly(methyl methacrylate) include Nanostrength (registered trademark) "M51", "M51N", "M52", "M52N", and "M22" (trade names, available from Arkema S.A.); and examples of the triblock copolymer of poly(styrene)/poly(butadiene)/poly(methyl methacrylate) include Nanostrength (registered trademark) "123", "250", "012", "E20", and "E40" (trade names, available from Arkema S.A.).

The content of the block copolymer (C) may be 0.5 mass% or more and 10.0 mass% or less, may be 1.0 mass% or more and 10.0 mass% or less, or may be 1.5 mass% or more and 8.0 mass% or less relative to the total amount of the resin composition. When the content of the block copolymer (C) is 0.5 mass% or more, the temporary adhesiveness and the adhesiveness after being cured can be improved, and when the content is 10.0 mass% or less, the sheet performance can be improved.

From the viewpoint that the temporary adhesiveness is excellent and, as a result, the adhesiveness after being cured and reliability are excellent, the thermosetting resin (B) may have a softening point of 40°C or higher and 120°C or lower, and the hard block of the block copolymer (C) may have a glass transition temperature of 40°C or higher and 120°C or lower. In a combination of the thermosetting resin (B) under the above conditions and the block copolymer (C) under the above conditions, the thermosetting resin (B) is softened by heat during temporary bonding, and at the same time, the hard block of the block copolymer (C) is softened. Consequently, the temporary adhesiveness can be further enhanced.

The content ratio [(B)/(C)] of the thermosetting resin (B) and the block copolymer (C) may be 0.1 or more and 20 or less, may be 0.2 or more and 15 or less, or may be 0.2 or more and 10 or less in terms of mass ratio. When the content ratio [(B)/(C)] is within the above range, both the temporary adhesiveness and the adhesiveness after being cured can be achieved.

### Binder Resin (D)

The binder resin (D) used in the present embodiment is not particularly limited as long as it is a resin material for processing the resin composition into a sheet. Examples of the binder resin (D) include a silicone oil, an acrylic resin (excluding the block copolymer (C)), a phenoxy resin, a nitrile rubber, and an acrylic rubber. The binder resin (D) may be an acrylic resin from the viewpoint of improving sheet performance. Each of these resins may be used alone, or two or more of them may be mixed together and used.

The weight-average molecular weight (Mw) of the binder resin (D) may be 200000 or more and 1000000 or less, or may be 400000 or more and 800000 or less. When the weight-average molecular weight of the binder resin (D) is 200000 or more, the sheet formability is improved, and when the weight-average molecular weight is 1000000 or less, the resin composition has a viscosity suitable for the coating film.

The glass transition temperature (Tg) of the binder resin (D) may be -40°C or higher and 0°C or lower, or may be -30°C or higher and -5°C or lower. When the Tg of the binder resin (D) is -40°C or higher, tack on the sheet surface is eliminated and the handling ability is improved, and when the Tg of the binder resin (D) is 0°C or lower, the sheet formability is improved.
The glass transition temperature can be measured in accordance with JIS K7121: 2012.

The content of the binder resin (D) may be 5.0 mass% or more and 30.0 mass% or less, may be 6.0 mass% or more and 25.0 mass% or less, or may be 6.0 mass% or more and 20.0 mass% or less relative to the total amount of the resin composition. When the content of the binder resin (D) is 5.0 mass% or more, the sheet performance is good, and when the content is 30.0 mass% or less, a reduction in the thermal conductivity can be suppressed.

### Curing Agent

The resin composition used in the present embodiment may further contain a curing agent. The curing agent is not particularly limited, and examples of the curing agent include aliphatic amines, aromatic amines, dicyandiamides, dihydrazide compounds, acid anhydrides, and phenol resins. Examples of the aromatic amines include diaminodiphenylmethane, m-phenylenediamine, 4,4'-diaminodiphenylsulfone, 3,3'-diaminodiphenylsulfone, diethyltoluenediamine, trimethylenebis(4-aminobenzoate), polytetramethylene oxide-di-p-aminobenzoate, and 4,4'-diamino-3,3'-diethyldiphenylmethane. Examples of the dihydrazide compounds include carboxylic acid dihydrazides, such as adipic acid dihydrazide, dodecanoic acid dihydrazide, isophthalic acid dihydrazide, and p-oxybenzoic acid dihydrazide. Examples of the acid anhydrides include phthalic anhydride, tetrahydrophthalic anhydride, hexahydrophthalic anhydride, endomethylene tetrahydrophthalic anhydride, dodecenylsuccinic anhydride, a reaction product between maleic anhydride and polybutadiene, and a copolymer of maleic anhydride and styrene. The curing agent may be an aromatic diamine containing a sulfonyl group from the viewpoint of adhesiveness after being cured and reliability.

When a curing agent is blended in the resin composition used in the present embodiment, the blending amount of the curing agent may be 1 part by mass or more and 300 parts by mass or less, or may be 10 parts by mass or more and 250 parts by mass or less relative to 100 parts by mass of the thermosetting resin (B) from the viewpoint of reliability.

The resin composition used in the present embodiment may further contain a curing accelerator for accelerating curing. Specific examples of the curing accelerator include imidazoles, triphenylphosphine or tetraphenylphosphine and salts thereof, and amine-based compounds and salts thereof, such as diazabicycloundecene. The curing accelerator may be, for example, 2-methylimidazole, 2-ethylimidazole, 2-phenylimidazole, 2-phenyl-4-methylimidazole, 2-phenyl-4-methyl-5-hydroxymethyl imidazole, 2-phenyl-4,5-dihydroxymethyl imidazole, 2-C₁₁H₂₃-imidazole, or an adduct of 2-methylimidazole and 2,4-diamino-6-vinyltriazine, or may be an imidazole compound having a melting point of 180°C or higher. As the curing accelerator, an imidazole containing no active hydrogen, such as 1-benzyl-2-phenylimidazole, 1-benzyl-2-methylimidazole, or 1,2-dimethylimidazole, may be used from the viewpoint of improving sinterability.

When a curing accelerator is blended in the resin composition used in the present embodiment, the blending amount of the curing accelerator may be 0.2 parts by mass or more and 20 parts by mass or less, or may be 0.5 parts by mass or more and 15 parts by mass or less relative to 100 parts by mass of the thermosetting resin (B) from the viewpoint of the storage stability of the sheet.

### Diluent

The resin composition used in the present embodiment may further contain a diluent from the viewpoint of workability. Examples of the diluent include methyl ethyl ketone, toluene, butyl carbitol, cellosolve acetate, ethyl cellosolve, butyl cellosolve, butyl cellosolve acetate, butyl carbitol acetate, diethylene glycol dimethyl ether, diacetone alcohol, cyclohexanone, N-methyl-2-pyrrolidone (NMP), dimethylformamide, N,N-dimethylacetamide (DMAc), γ-butyrolactone, 1,3-dimethyl-2-imidazolidinone, and 3,5-dimethyl-1-adamantanamine (DMA). Each of these resins may be used alone, or two or more of them may be mixed together and used.

When the resin composition used in the present embodiment contains a diluent, the content of the diluent may be 3 parts by mass or more and 40 parts by mass or less, may be 4 parts by mass or more and 38 parts by mass or less, or may be 5 parts by mass or more and 36 parts by mass or less relative to 100 parts by mass of the conductive particle (A). When the content of the diluent is 3 parts by mass or more, the viscosity of the resin composition can be reduced through dilution, and when the content of the diluent is 40 parts by mass or less, the amount of the solvent remaining in the sheet is small, and thus the generation of voids in curing of the resin composition can be controlled.

### Other Components

In addition to the components described above, the resin composition used in the present embodiment can contain, as necessary, other components that are generally compounded in this type of composition, within a range without impairing the effect of the present embodiment, and examples of the other components include coupling agents; antifoamers; surfactants; colorants such as pigments or dyes; various polymerization inhibitors; antioxidants; inorganic ion exchangers; and various other additives. Each of these additives may be used alone, or two or more may be mixed and used.

Examples of the coupling agents include: silane coupling agents such as epoxysilane, mercaptosilane, aminosilane, alkylsilane, clay silane, vinylsilane, and sulfide silane; a titanate coupling agent; an aluminum coupling agent; and an aluminum/zirconium coupling agent. Examples of the colorants include carbon black.
Examples of the inorganic ion exchangers include hydrotalcite.

The total content of the conductive particle (A), the thermosetting resin (B), the block copolymer (C), and the binder resin (D) contained in the resin composition of the present embodiment may be 70 mass% or more, or may be 75 mass% or more.

The coefficient of thermal conductivity of a cured product of the resin composition may be 30 W/m · K or more, or may be 35 W/m · K or more.
The coefficient of thermal conductivity can be measured by the method described in the examples.

The thermally conductive adhesive sheet of the present embodiment can be used as an adhesive sheet material useful for applications requiring thermal conductivity, particularly semiconductor bonding application. In particular, a good thermal conductivity is maintained even when the element generates heat.

Method for Producing Thermally Conductive Adhesive Sheet Examples of the method for producing the thermally conductive adhesive sheet of the present embodiment include a method including: mixing a conductive particle (A), a thermosetting resin (B), a block copolymer (C), and a binder resin (D) to form a resin composition; and forming the resin composition into a sheet.
Note that the thermally conductive adhesive sheet of the present embodiment may be formed on a supporting film.

The resin composition can be prepared by thoroughly mixing a conductive particle (A), a thermosetting resin (B), a block copolymer (C) and a binder resin (D), and other components to be added as necessary, using a disperser, a kneader, a rotation-revolution mixer, or the like.
As the conductive particle (A), the thermosetting resin (B), the block copolymer (C), the binder resin (D), and other various components to be added as necessary, those described in the section of "Method for Producing Thermally Conductive Adhesive Sheet" can be used.

Next, the resin composition is applied onto a supporting film and dried to form a sheet thereon. Examples of the coating method include known methods such as a gravure coating method, a die coating method, a comma coating method, a lip coating method, a cap coating method, and a screen printing method. The drying temperature may be 70°C or higher and 120°C or lower, or may be 80°C or higher and 100°C or lower. When the drying temperature is 70°C or higher, the solvent fraction to remain in the sheet can be small, void generation in curing the resin composition is controlled, and when it is 120°C or lower, the sheet formability and handling ability are improved. A specific example of the coating device includes µCoater 350, available from Yasui Seiki Co., Ltd.

As the supporting film, usable is a plastic film of polyethylene, polypropylene, polyester, polycarbonate, polyacrylate, polyacrylonitrile, or the like with a release agent layer formed on one surface thereof.
The thickness of the supporting film is usually 10 µm or more and 100 µm or less, and may be 20 µm or more and 60 µm or less, from the viewpoint of handling ability.

The thickness of the thermally conductive adhesive sheet may be 10 µm or more and 100 µm or less, or may be 10 µm or more and 50 µm or less. Setting of the thickness of the thermally conductive adhesive sheet to be 10 µm or more enables the handling ability of the sheet to be stabilized, and setting of the thickness to be 100 µm or less enables the tack due to the residual solvent in the sheet to be reduced.

### Semiconductor Device

The semiconductor device of the present embodiment includes a supporting member, a semiconductor element mounted on the supporting member with an adhesive layer interposed therebetween, in which the adhesive layer is a cured product of the thermally conductive adhesive sheet described above.

The semiconductor device of the present embodiment can be produced, for example, by temporarily bonding a bonding surface or the like of a silicon chip under the condition of a temperature of 50°C or higher and 80°C or lower and a pressure of 0.1 MPa or more and 1 MPa or less for a heating and pressing time of 0.1 minutes or more and 1 minute or less, then mounting the resultant chip on a supporting member such as a copper frame, pressurebonding the chip to the frame by heating under the conditions of a temperature of 80°C or higher and 200°C or lower and a pressure of 0.1 MPa or more and 5 MPa or less for a heating and pressing time of 0.1 minutes or more and 1 minute or less, and further heating and curing the resultant product at 150°C or higher and 200°C or lower for 0.5 minutes or more and 2 hours or less.

Examples of the supporting member include: metal substrates such as copper frames, aluminum or iron plates; ceramic substrates; and glass epoxy substrates.
Examples of the semiconductor element include ICs, LSIs, diodes, thyristors, and transistors.

### EXAMPLES

The present disclosure will be specifically described through examples; however, the present disclosure is not limited in any way to these examples.

### Examples 1 to 8, Comparative Examples 1 and 2

### (1) Preparation of Resin Composition

The components of the type and the amount shown in Table 1 were mixed at 25°C using a rotation-revolution mixer (model number: ARV-310, available from Thinky Corporation) to prepare a resin composition.
Note that a blank cell in Table 1 indicates that the given component was not blended.

### (2) Production of Thermally Conductive Adhesive Sheet

Using µCoater 350, available from Yasui Seiki Co., Ltd., the resin composition was applied onto one release surface of a release film (trade name: TN-200, available from Toyobo Co., Ltd., thickness: 25 µm) according to a gravure coating method to form a thermally conductive adhesive sheet having a thickness of 20 µm. Note that the drying condition was a temperature of 80°C and a speed of 1 m/min.

Details of each component used in preparing the resin compositions are described in Table 1 as follows.

### Conductive Particle (A)

- Silver particles (A1) (trade name: TC-505C, available from Tokuriki Honten Co., Ltd., average particle size: 1.93 µm, tap density: 6.25 g/cm³, specific surface area: 0.65 m²/g)
- Silver particles (A2) (trade name: DOWA Ag nano powder-1, available from DOWA Electronics Materials Co., Ltd., average particle size: 20 nm)
   The average particle sizes of the silver particles (A1) and (A2) were each determined from the particle size (50% particle size D50) at which the cumulative volume was 50% in a particle size distribution measured using a laser diffraction-type particle size distribution measurement device (device name: SALD-7500nano, available from Shimadzu Corporation).

### Thermosetting Resin (B)

- Solid epoxy resin (1) (trade name: jER (registered trademark) 1004, available from Mitsubishi Chemical Corporation, Mw = 1650, softening point as measured by the DSC method: 71°C (ring and ball method: 97°C))
- Semisolid epoxy resin (2) (trade name: EPICLON (registered trademark) 860, available from DIC Corporation, Mw = 480, softening point as measured by the DSC method: 35°C (ring and ball method: unknown because of semisolid))
- Solid epoxy resin (3) (trade name: jER (registered trademark) 1009, available from Mitsubishi Chemical Corporation, Mw = 3800, softening point as measured by the DSC method: 80°C (ring and ball method: 144°C))
- Liquid epoxy resin (1) (trade name: jER (registered trademark) 828, available from Mitsubishi Chemical Corporation, Mw = 370, liquid at room temperature (25°C), viscosity at 25°C: 13 Pa · s)

Note that the softening points of the solid epoxy resin and the semisolid epoxy resin were measured at a temperature rise rate of 10°C/min in a temperature range of -80°C or higher and 200°C or lower using the DSC method with a differential scanning calorimeter (device name: DSC Q2000, available from TA Instruments). The softening point was measured by the ring and ball method in accordance with JIS K 7234.

The viscosity of the liquid epoxy resin at 25°C was measured using a rotary viscometer (Vismetron VGH viscometer, available from Shibaura System Co., Ltd.).

### Block Copolymer (C)

- Triblock copolymer (1) (trade name: Nanostrength (registered trademark) M52, available from Arkema S.A., triblock copolymer of acrylic monomer (PMMA-b-PBA-b-PMMA; b = block, Tg of soft block (PBA) = -60°C, Tg of hard block (PMMA) = 130°C))
- Triblock copolymer (2) (trade name: Nanostrength (registered trademark) E20, available from Arkema S.A., triblock copolymer of acrylic monomer (PMMA-b-BR-b-PS; b = block, Tg of soft block (BR) = -80°C, hard block (Tg of PMMA = 130°C, Tg of PS = 90°C)) Note that the Tg of each of the soft block and the hard block of the block copolymer was determined by measurement at a temperature rise rate of 10°C/min in a temperature range of - 80°C or higher and 200°C or lower using a differential scanning calorimeter (device name: DSC Q 2000, available from TA Instruments) in accordance with JIS K 7121: 2012.

### Block Copolymer Other Than Component (C)

- Diblock copolymer (trade name: Nanostrength (registered trademark) D51N, available from Arkema S.A., methacrylate-acrylate diblock copolymer)

### Binder Resin (D)

- Acrylic binder (trade name: Nissetsu, available from Nippon Carbide Industries Co., Inc., Mw = 500000, glass transition temperature: -10°C)

### Curing Agent

- 4,4-diaminodiphenyl sulfone (trade name: 4,4-DAS, available from Mitsui Fine Chemicals, Inc., sulfone group-containing aromatic diamine)

### Curing Accelerator

- Imidazoles (trade name: Curezol 2P4MHZ-PW, available from Shikoku Chemicals Corporation)

### Diluent

- Methyl ethyl ketone (available from Sankyo Chemical Co., Ltd.)

Under the measurement conditions described below, the properties of the thermally conductive adhesive sheets were measured and evaluated using adhesive sheets produced in Examples 1 to 8 and Comparative Examples 1 and 2 (hereinafter may be simply referred to as "adhesive sheets") in which a thermally conductive adhesive sheet was formed on one surface of a release film. The evaluation results are shown in Table 1.

### Evaluation Items

### (1) Sheet Performance

The adhesive sheet was folded at 180 degrees, visually observed and evaluated in accordance with the following criteria.
A: No tack was observed on the sheet surface, overlapping portions of the thermally conductive adhesive sheet of the folded adhesive sheet did not adhere together, and the folded part did not crack.
B: Slight tack was observed on the sheet surface, but overlapping portions of the thermally conductive adhesive sheet of the folded adhesive sheet did not adhere together and the folded part did not crack.
C: Tack was observed on the sheet surface, overlapping portions of the thermally conductive adhesive sheet of the folded adhesive sheet adhered together, and the folded part cracked.

### (2) Temporary Adhesion Strength

A silicon chip of 6 mm × 6 mm, and a chip with gold on the back, which had a gold deposition layer on the bonding surface thereof, were temporarily bonded to the thermally conductive adhesive sheet-side of the adhesive sheet at 65°C for 1 second and under a pressure of 1 MPa. Then, the release film of the adhesive sheet was peeled, a surface opposite to the surface that had been temporarily-bonded with the gold-backed chip of the thermally conductive adhesive sheet was mounted on a solid copper frame, and the surface and the frame were pressure-bonded by heating under the conditions of 125°C and 0.1 MPa for 5 seconds, thereby producing a temporarily-bonded sample. Using a mount strength measuring device (device name: 2200 EVO-plus, available from BE Semiconductor Industries N.V. (Besi)), the die shear strength at 25°C of the sample was measured.

### (3) Adhesion Strength After Being Cured

The temporarily-bonded sample produced in (2) above was further cured in an oven at 200°C for 1 hour to produce a sample for measurement of the adhesion strength after being cured. Using a mount strength measuring device (device name: 2200 EVO-plus, available from BE Semiconductor Industries N.V. (Besi)), the die shear strength at 25°C of the sample was measured.

### (4) Coefficient of Thermal Conductivity

The thermally conductive adhesive sheet was cured at 200°C for 2 hours, and cut to give a sample-1 with a size of 1 cm in length × 1 cm in width × 20 µm in thickness. A sample-2 was produced in the same and/or similar manner as the above operation except that the curing temperature of the thermally conductive adhesive sheet was changed from 200°C to 230°C. The thermal conductivities of the sample-1 and the sample-2 were measured by a laser flash method in accordance with JIS R 1611: 1997 using a thermal conductivity meter (device name: TC 7000, available from Advance Riko, Inc.).

### (5) Reliability Test (Hot-cold Cycle)

The sample produced in (3) above was heated from -55°C to 150°C in a hot-cold cycle tester, and then cooled to -55°C. This operation is one cycle, and each sample was tested in 1000 cycles to determine the incidence rate of defects (peeling failure) (number of samples = 20).

### [Table 1]

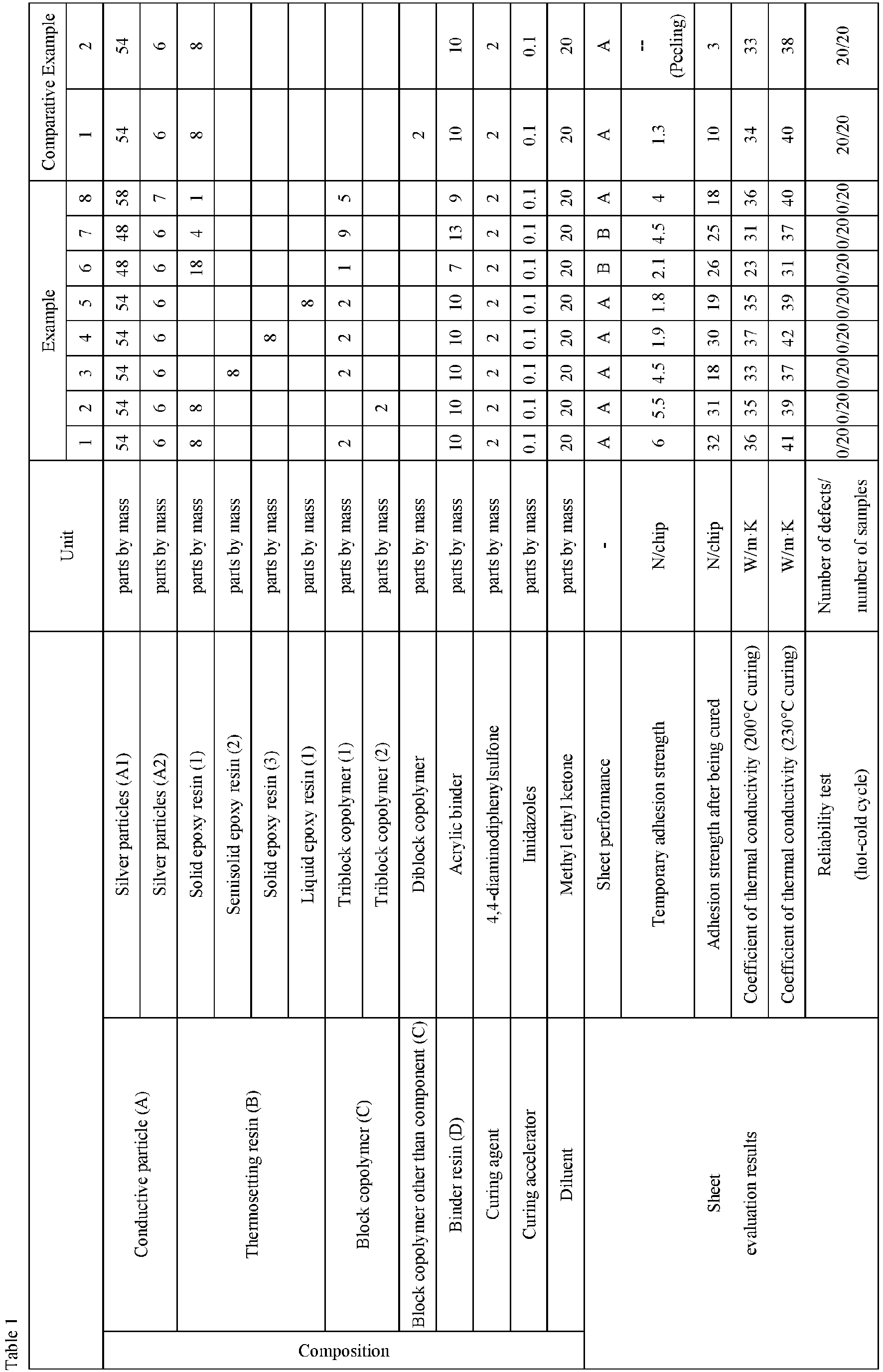

In Examples 1 to 8 using a thermally conductive adhesive sheet including a resin composition that was formed into a sheet, the resin composition containing the components (A) to (D), semiconductor devices all excellent in temporary adhesiveness and adhesiveness after being cured, and having excellent reliability can be produced.

## Claims

1. A thermally conductive adhesive sheet comprising:
a resin composition that is formed into a sheet, the resin composition comprising
a conductive particle (A),
a thermosetting resin (B),
a block copolymer (C), and
a binder resin (D),
wherein the block copolymer (C) is at least one selected from the group consisting of a copolymer having three blocks (triblock) or more and made from poly(methyl methacrylate) and poly(butyl acrylate) and a copolymer having three blocks (triblock) or more and made from poly(styrene), poly(butadiene), and poly(methyl methacrylate).

2. The thermally conductive adhesive sheet according to claim 1, wherein the conductive particle (A) is a silver particle.

3. The thermally conductive adhesive sheet according to claim 1 or 2, wherein a content of the conductive particle (A) is 40.0 mass% or more and 90.0 mass% or less relative to a total amount of the resin composition.

4. The thermally conductive adhesive sheet according to any one of claims 1 to 3, wherein the thermosetting resin (B) is solid at room temperature.

5. The thermally conductive adhesive sheet according to any one of claims 1 to 4, wherein the thermosetting resin (B) is an epoxy resin having a softening point, as measured by a ring and ball method, of 30°C or higher and 150°C or lower.

6. The thermally conductive adhesive sheet according to any one of claims 1 to 5, wherein a content of the thermosetting resin (B) is 0.5 mass% or more and 20.0 mass% or less, a content of the block copolymer (C) is 0.5 mass% or more and 10.0 mass% or less, and a content of the binder resin (D) is 5.0 mass% or more and 30.0 mass% or less relative to a total amount of the resin composition.

7. A semiconductor device comprising:
a supporting member; and
a semiconductor element mounted on the supporting member with an adhesive layer interposed therebetween,
wherein the adhesive layer is a cured product of the thermally conductive adhesive sheet described in any one of claims 1 to 6.
